# EUROPÄISCHE PATENTSCHRIFT

(11) **EP 2 544 838 B1**
(45) Veröffentlichungstag und Bekanntmachung des Hinweises auf die Patenterteilung: **11.12.2013**
(21) Anmeldenummer: 11713175.5
(22) Anmeldetag: 10.03.2011
(51) Int. Cl.: B21D 37/16, B21D 37/20, B23P 15/24, B29C 33/04

(54) **VERFAHREN ZUM HERSTELLEN EINES KÜHLBAREN FORMWERKZEUGS SOWIE DURCH DAS VERFAHREN HERGESTELLTES FORMWERKZEUG**
METHOD FOR PRODUCING A COOLABLE MOULDING TOOL
PROCÉDÉ POUR PRODUIRE UN OUTIL DE FORMAGE REFROIDISSABLE

(30) Priorität: 12.03.2010 DE 102010011087
(43) Veröffentlichungstag der Anmeldung: 16.01.2013
(73) Patentinhaber: Volkswagen Aktiengesellschaft, 38440 Wolfsburg (DE); Audi AG, 85045 Ingolstadt (DE)
(72) Erfinder: WALTL, Hubert, 85107 Baar-Ebenhausen (DE); HAMANN, Holger, 38104 Braunschweig (DE); MEKKAOUI ALAOUI, Mohammed, 30659 Hannover (DE); MALEK, Roland, 38440 Wolfsburg (DE); KOTZIAN, Mathias, 38446 Wolfsburg (DE)
(86) Internationale Anmeldenummer: PCT/EP2011/001182
(87) Internationale Veröffentlichungsnummer: WO 2011/110346

(56) Entgegenhaltungen:
- EP-A2- 1 749 593
- DE-A1-102007 003 745
- DE-A1-102007 047 314
- DE-A1-102008 016 118

## Beschreibung

Die Erfindung betrifft ein Verfahren zum Herstellen eines kühlbaren Formwerkzeugs, gemäß dem Oberbegriff des Anspruchs 1 sowie ein durch dieses Verfahren herstellbares kühlbares Formwerkzeug gemäß dem Oberbegriff des Anspruchs 10.

Verfahren zum Herstellen von kühlbaren Formwerkzeugen sind bekannt. Die DE 10 2007 047 314 A1 betrifft ein Presswerkzeug zum Warmumformen und/oder Presshärten von Werkstücken aus Blech. Das Werkzeug weist wenigstens einen im Abstand von der Stempel- und/oder Matrizenoberfläche des Werkzeugs verlaufenden Strömungskanal für ein Wärme von dem Werkstück abführendes Medium auf. Es ist vorgesehen, dass der Strömungskanal derart in einem Abstand von der Stempel- und/oder Matrizenoberfläche angeordnet ist, dass sich in Strömungsrichtung ein gewünschtes Wärmeübertragungsprofil zwischen dem Werkstück und dem Medium ergibt. Aus der DE 10 2006 017 808 A1 ist ein temperierbares Spritzgießwerkzeug sowie ein Verfahren zur Herstellung eines temperierbaren, wenigstens ein Formnest ausbildendenden Spritzgießwerkzeugs bekannt. Ein Aufbau eines Materials erfolgt durch Aufbringen einer Pufferlage oder als Draht und Aufschmelzen des Materials mittels eines Laserstrahls. Es werden Segmente zur Ausbildung eines Einsatzes so miteinander verbunden, dass Kanäle von plattenförmigen Segmenten und des weiteren Segments miteinander kommunizieren. Aus der EP 0 665 780 B1 ist ein Verfahren zur Herstellung eines mit Kühlkanälen versehenen Werkzeugs, bei welchem das Werkzeug zunächst in der Kanalebene aufgetrennt wird und anschließend die Kanäle durch Fräsen hergestellt werden, bekannt. Eine Verbindung der aufgetrennten Werkzeugteile erfolgt durch Hart- und/oder Hochtemperaturlöten. Die EP 1 004 422 A1 offenbart eine Vorrichtung zum Spritzgießen von Kunststoffformteilen mit einem Formkern und einem Formgesenk, wobei der Hohlraum zwischen Formkern und Formgesenk die Formteilkavität bildet und im Formkern und/oder im Formgesenk der Kontur der Formteilkavität angepasste Temperiermittelkanäle vorgesehen sind. Es ist vorgesehen, dass der Formkern und/oder das Formgesenk kavitätsseitig wenigstens ein Segment aufweist, welches jeweils mit konturangepassten Temperiermittelkanälen versehen und kraftschlüssig mit dem Formkern beziehungsweise dem Formgesenk verbunden ist. Die DE 10 2007 003 745 A1 bezieht sich auf die Ausführung eines Werkzeugs zur Herstellung von pressgehärteten Blechbauteilen und zeigt den nächstliegenden Stand der Technik. Eine Abkühlung von umgeformten Werkstücken erfolgt mittels einer Kühlung, die sich in einer Trennfläche zwischen Trägerplatten und den Aktivteilen befinden. Eine Kühlmittelzuführung und Kühlmitteldurchleitung wird über die Trägerplatte ausgeführt. Die Trennfläche kann einer Außenkontur eines Stempels beziehungsweise einer Endkontur eines umgeformten Werkstücks angenähert werden.

Aufgabe der Erfindung ist es, ein verbessertes Formwerkzeug sowie ein Verfahren zum Herstellen desselben bereitzustellen, die eine bessere Kühlung ermöglichen.

Die Aufgabe ist mit den Merkmalen der unabhängigen Patentansprüche 10 bzw.1 gelöst.

Die Aufgabe ist bei einem gattungsgemäßen Verfahren zur Herstellung eines kühlbaren Formwerkzeugs durch die Merkmale des Kennzeichens des Anspruchs 1 gelöst. Es sind ein Herstellen eines an einer Oberfläche Fluidpfade aufweisenden metallischen Teilkörpers des Werkzeugs, ein Schützen der Fluidpfade gegen ein Eindringen von Partikeln, ein Auftragen einer Deckschicht, vorzugsweise aus einem metallischen oder oxidkeramischen Material über die geschützten Fluidpfade mittels eines thermischen Beschichtungsverfahrens, beispielsweise Flammspritzen, Laserspritzen, Detonationsspritzen, Kaltgasspritzen, Lichtbogenspritzen, Metallschutzgasschweißen (vorzugsweise unter N2- oder CO2- Schutzgasatmosphäre) oder Plasmaschweißen, insbesondere Plasma-Pulver-Auftragschweißen vorgesehen. Unter Fluidpfaden werden teilweise offene Fluidpfade, insbesondere im Sinne von Kanälen, und/oder geschlossene Fluidpfade verstanden. Vorteilhaft kann zunächst der Teilkörper des Werkzeugs in einer beliebigen Kontur, beispielsweise angepasst an ein später damit zu fertigendes Teil, hergestellt werden. Vorteilhaft können an der Oberfläche des Teilkörpers die Fluidpfade eingebracht werden, die vorteilhaft damit ebenfalls an die Kontur des später zu fertigenden Werkstücks angepasst sind. Die Fluidpfade können vorteilhaft gegen ein Eindringen von Partikeln geschützt werden, so dass diese vorteilhaft auch nach dem Auftragen der Deckschicht erhalten bleiben. Unter Lichtbogenspritzen wird ein Aufbringen von auf ca. 4000° erhitzten Partikeln, insbesondere metallische und/oder elektrisch leitende Partikel auf die Oberfläche verstanden. Das Erhitzen und Erzeugen der Partikel kann mittels eines elektrischen Stroms in Anwesenheit eines ausströmenden komprimierten Mediums, insbesondere eines Schutzgases, Pressluft oder Ähnliches, zwischen zwei mit einem Vorschub aufeinander zu bewegten Drähten erfolgen.

Ferner kann vorteilhaft ein Auftragen einer Deckschicht auf die Oberfläche, vorzugsweise mittels eines der erwähnten thermischen Beschichtungsverfahren erfolgen und damit die Oberfläche auf einfache Weise mit einer Deckschicht mit vorgegebenen Struktur und Form versehen werden.

Bei einer Ausführungsform des Verfahrens ist ein Schützen der Fluidpfade mittels Einbringen eines Füllmediums vorgesehen. Vorteilhaft kann auf einfache Art und Weise ein Füllmedium in die Fluidpfade eingebracht werden, die dazu beispielsweise halb offen ausgeführt sein können. Bei dem Füllstoff kann es sich um ein beliebiges Medium, insbesondere Wachs und/oder ein Salz handeln. Vorteilhaft kann das Füllmedium so ausgelegt sein, dass dieses verflüssigt werden kann, beispielsweise mittels Erwärmen und/oder Lösen, wobei dieses nach dem Auftragen der Deckschicht vorteilhaft wieder aus den Fluidpfaden entfernbar ist.

Bei einer weiteren Ausführungsform des Verfahrens ist ein Einbringen der Fluidpfade in die Oberfläche mittels Materialabtragen vorgesehen. Vorteilhaft kann nach einer Herstellung des Teilkörpers auf einfache Art und Weise der Fluidpfad, beziehungsweise können die Fluidpfade in die Oberfläche eingebracht werden. Vorteilhaft können die Fluidpfade mittels Fräsen, Erodieren, Ätzen und/oder Schleifen und/oder Ähnliches eingebracht werden.

Bei einer weiteren Ausführungsform des Verfahrens ist ein Schützen der Fluidpfade mittels Abdecken vorgesehen. Die Abdeckung kann beispielsweise ein Metallband aufweisen, das vorteilhaft auf einfache Art und Weise über die Fluidpfade gelegt werden kann, beispielsweise mittels Kleben an Rändern der Fluidpfade.

Bei einer weiteren Ausführungsform des Verfahrens ist ein Schützen der Fluidpfade mittels Einbringen einer für Partikel zumindest schwer durchlässigen Kanalvorrichtung in die Fluidpfade vorgesehen. Vorteilhaft kann die Kanalvorrichtung dem mittels des Lichtbogenspritzens erzeugten Partikelstrom widerstehen, so dass nach dem Aufbringen der Deckschicht noch ein Fluidpfad im Inneren der Kanalvorrichtung verbleibt. Bei der Kanalvorrichtung kann es sich insbesondere um eine Spiralfeder, um einen Schlauch, ein flexibles Rohr, ein Verbundrohr und/oder Ähnliches handeln. Das flexible Rohr kann beispielsweise ein Kupferrohr sein. Ferner kann es sich bei der Kanalvorrichtung um ein Wellrohr, insbesondere ein Edelstahlwellrohr handeln. Ein Wellrohr weist auf Grund von sich abwechselnden dickeren und dünneren Radien eine hohe Flexibilität auf, auch wenn es aus einem Material wie Edelstahl gefertigt ist, womit eine hohe Korosionsbeständigkeit erreicht werden kann. Eine Ausführung der Kanalvorrichtung als Wellrohr ermöglicht damit eine einfache Abdichtung, die vorteilhaft druckdicht bis zu einem Druck des Kühlmediums von 4bar und mehr ist. Zur Verbesserung der Wärmeabfuhr über die Fluidpfade kann die Kanalvorrichtung auch mit einer Wärmeleitschicht versehen sein, beispielsweise einer Hartlotschicht, die die Kanalvorrichtung mit dem Teilkörper verbindet.

Bei einer weiteren Ausführungsform des Verfahrens sind ein Nachbehandeln der Deckschicht und/oder ein Nachbehandeln der Deckschicht mittels Kugelstrahlen und/oder Polieren und/oder Nachfräsen vorgesehen. Vorteilhaft kann die Deckschicht für einen Formvorgang eines mit dem Formwerkzeug herzustellenden Werkstücks veredelt werden und/oder formvollendet werden. Bei dem Werkzeug kann es sich um ein Werkzeug zum Presshärten, zum Umformen und/oder um ein Urformwerkzeug, beispielsweise ein Spritzgießwerkzeug handeln. Besonders vorteilhaft kann das Verfahren zum Herstellen eines Spritzgießwerkzeugs eingesetzt werden. Ferner ist es denkbar in die nachbehandelte Schicht eine Narbung einzubringen.

Bei einer weiteren Ausführungsform des Verfahrens ist ein Bilden einer Werkzeugkavität mittels der Deckschicht vorgesehen. Vorteilhaft kann mittels der Deckschicht die Kavität, die mit dem Werkstück in Berührung kommt beziehungsweise die Formgebung bestimmt, erzeugt werden.

Bei einer weiteren Ausführungsform des Verfahrens sind ein Bilden einer Werkzeugkavität mittels einer der Deckschicht gegenüber liegenden Oberfläche des Teilkörpers und ein Zusammenfügen des Teilkörpers mit einem Grundkörper des Werkzeugs vorgesehen. Vorteilhaft kann die mit dem Werkstück in Berührung kommende Oberfläche, die auch die Kavität bildet, auf herkömmliche Art und Weise hergestellt werden. Auf der dieser gegenüber liegenden Seite können in einem wählbaren Abstand die Kühlkanäle auf die vorab beschriebene Art und Weise eingebracht werden. Insbesondere ist es möglich, durch die Wahl einer Materialdicke des Teilkörpers einen Abstand einzelner Kühlkanäle zu der die Kavität bildenden Oberfläche des Werkzeugs festzulegen. Vorteilhaft kann der vergleichsweise filigrane, die Kühlkanäle aufweisende Teilkörper mit dem Grundkörper zu dem Gesamtwerkzeug beziehungsweise einer Gesamtwerkzeughälfte zusammengefügt werden. Das Fügen kann form-, stoff-, reib- und/oder kraftschlüssig, insbesondere mittels einer Verschraubung erfolgen.

Die Aufgabe ist außerdem bei einem gattungsgemäßen kühlbaren Formwerkzeug, insbesondere herstellbar nach einem vorab beschriebenen Verfahren, durch die Merkmale des Kennzeichens des Anspruchs 10 gelöst. Das Formwerkzeug weist einen Teilkörper, der eine mittels Lichtbogenspritzen aufgebrachte Deckschicht aufweist, auf. Zwischen der Deckschicht und dem Teilkörper sind Kühlkanäle angeordnet. Es ergeben sich die vorab beschriebenen Vorteile.

Bei einem Ausführungsbeispiel des Formwerkzeugs ist vorgesehen, dass eine Oberfläche der Deckschicht eine Kavität des Werkzeugs bildet. Vorteilhaft kann mittels der Formgebung der Deckschicht die Form des herzustellenden Werkstücks bestimmt werden.

Bei einem weiteren Ausführungsbeispiel der kühlbaren Formwerkzeugs ist vorgesehen, dass die Oberfläche der Deckschicht einem Grundkörper des Werkzeugs zugeordnet ist. Vorteilhaft können der Grundkörper, die Oberfläche der Deckschicht und der Teilkörper je eine Gesamtwerkzeughälfte des Formwerkzeugs bilden.

Weitere Vorteile, Merkmale und Einzelheiten ergeben sich aus der nachfolgenden Beschreibung, in der - gegebenenfalls unter Bezug auf die Zeichnung - zumindest ein Ausführungsbeispiel im Einzelnen beschrieben ist. Gleiche, ähnliche und/oder funktionsgleiche Teile sind mit gleichen Bezugszeichen versehen. Es zeigen:
- Fig. 1: eine schematische Darstellung eines als Spritzgießwerkzeug ausgelegten Formwerkzeugs mit einer oberen Werkzeughälfte und einer unteren Werkzeughälfte, die jeweils eine Deckschicht aufweisen;
- Fig. 2: eine schematische Schnittansicht einer unteren Werkzeughälfte eines weiteren Formwerkzeugs, wobei im Unterschied zur Darstellung der Fig. 1 eine Deckschicht eines Teilkörpers kraftschlüssig einem Grundkörper des Werkzeugs zugeordnet ist.

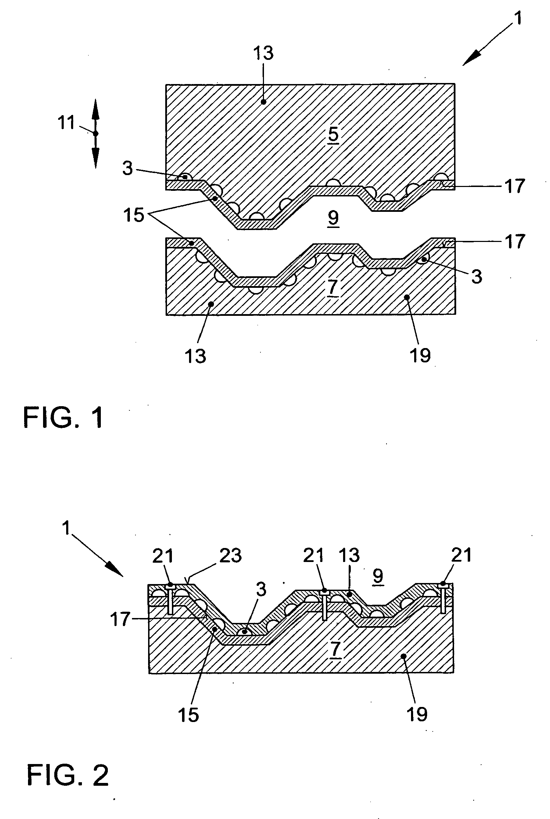

Fig. 1 zeigt eine schematische Ansicht eines Formwerkzeugs 1. Das Formwerkzeug 1 ist als Spritzgießwerkzeug ausgelegt und mittels Kühlkanälen 3 kühlbar.

Das Formwerkzeug 1 weist eine obere Werkzeughälfte 5 und eine untere Werkzeughälfte 7 auf. Zwischen den Werkzeughälften 5 und 7 befindet sich eine Kavität 9, in der ein Werkstück formbar ist, vorliegend mittels Einspritzen und Abhärten mittels Abkühlen eines Werkstoffs: Zum Entformen ist zumindest eine der Werkzeughälften hin- und herbewegbar gelagert, was mittels eines Doppelpfeils 11 symbolisiert ist. Jede der Werkzeughälften 5 und 7 weist einen Teilkörper 13 auf, auf den eine Deckschicht 15 aufgebracht ist. Die Deckschichten 15 der Teilkörper 13 sind mittels eines thermischen Beschichtungsverfahrens, beispielsweise Lichtbogenspritzen aufgebracht. Dabei verschmelzen flüssige, insbesondere metallische, Partikel mit einer ursprünglichen Oberfläche 17 des Teilkörpers 13. Die ursprüngliche Oberfläche 17 der Teilkörper 13 weist die Kühlkanäle 3 auf, die beispielsweise mittels Materialabtragen, insbesondere Fräsen, Erodieren, Ätzen, Schleifen und/oder Ähnlichem in die Oberfläche 17 des Teilkörpers 13 einbringbar sind. In einem weiteren Schritt, der aus Fig. 1 nicht näher ersichtlich ist, werden die Kühlkanäle 3 gegen ein Eindringen von Partikeln, wie sie beim Lichtbogenspritzen oder dergleichen auftreten, geschützt. Dies kann beispielsweise durch ein Einbringen eines Füllmediums wie Wachs und/oder Salz erfolgen. Alternativ und/oder zusätzlich ist es denkbar, die Fluidpfade abzudecken, beispielsweise mittels einer metallischen Abdeckung, insbesondere eines Metallbandes, insbesondere eines aufgeklebten Metallbandes. Alternativ und/oder zusätzlich ist es möglich, die Fluidpfade mittels Einbringen einer für Partikel zumindest schwer durchlässigen Kanalvorrichtung zu schützen. Die Kanalvorrichtung kann beispielsweise eine Spiralfeder, einen Schlauch, ein flexibles Rohr und/oder ein Verbundrohr und/oder Ähnliches aufweisen, wobei vorteilhaft nach dem Aufbringen der Beschichtung beziehungsweise Deckschicht 15 im Inneren der Kanalvorrichtung der jeweilige Kühlkanal 3 verbleibt. Im Falle eines Schützens der Fluidpfade mittels Einbringen eines Füllmediums wird dieses vor einer Inbetriebnahme des Formwerkzeugs ausgetrieben, insbesondere mittels Auswaschen und Lösen und/oder Verflüssigen, beispielsweise mittels Erwärmen.

Vorteilhaft können die Teilkörper 13 wie herkömmliche Werkzeugkörper beziehungsweise Grundkörper des Formwerkzeugs 1 hergestellt werden, wobei an deren dem Werkstück zugewandten Oberfläche 17 ein der Deckschicht 15 entsprechendes Mindermaß vorgesehen werden kann. Die Dicke der Deckschicht kann zwischen 5 und 20 mm, vorzugsweise ungefähr 10 mm betragen.

Zur Herstellung des in Fig. 1 gezeigten Formwerkzeugs 1 können zunächst die Teilkörper 13 inklusive der Fluidpfade, die später die Kühlkanäle 3 bilden, gefräst werden. Die Kühlkanäle werden gefüllt beispielsweise mittels dem Wachs, dem Salz und/oder der Kanalvorrichtung, insbesondere der Spiralfeder. Die Deckschicht 15 wird mittels Lichtbogenspritzen aufgetragen, wobei diese vorzugsweise maximal 10 mm beträgt. Das Wachs und/oder das Salz, also die Kanalverfüllung wird wieder entfernt oder kann alternativ in Form der Kanalvorrichtung, insbesondere der Spiralfeder, in dem ursprünglichen Fluidpfad verbleiben und den Kühlkanal 3 bilden. Zum endgültigen Feinbearbeiten der Kavität 9 kann die Deckschicht 15 fertigbehandelt werden, beispielsweise mittels Kugelstrahlen. Alternativ und/oder zusätzlich ist es möglich, die Deckschicht 15 mittels Materialabtragen weiter zu behandeln und/oder zu polieren.

Fig. 2 zeigt ein weiteres Ausführungsbeispiel eines Formwerkzeugs 1 in einer schematischen Schnittdarstellung, wobei lediglich eine untere Werkzeughälfte 7 dargestellt ist.

Im Unterschied zur Darstellung gemäß Fig. 1 ist ein Teilkörper 13 vorgesehen, der eine ursprüngliche Oberfläche 17 aufweist, in die Kühlkanäle 3 eingebracht sind und analog der Darstellung gemäß Fig. 1 auf die ursprüngliche Oberfläche 17 die Deckschicht 15 aufgebracht wurde.

Die Kühlkanäle 3, die Deckschicht 15 sowie die Oberfläche 17 können analog wie in Fig. 1 beschrieben hergestellt werden. Im Unterschied ist der Teilkörper 13 konturiert ausgeführt und einem Grundkörper 19 der unteren Werkzeughälfte 7 form- und kraftschlüssig mittels Verschraubungen 21 zugeordnet. Die Zuordnung der Deckschicht 15 zu dem Grundkörper 19 kann alternativ und/oder zusätzlich auf beliebige andere Art und Weise erfolgen, beispielsweise mittels Hartlöten, Kleben, formschlüssig und/oder Ähnlichem. Als weiteren Unterschied weist der Teilkörper 13 eine innere Oberfläche 23 auf, die die mit dem Werkstück in Berührung stehende Kavität 9 des Formwerkzeugs 1 bildet.

Der Teilkörper 13 kann eine gleich bleibende Dicke aufweisen, wobei die Kühlkanäle 3 einen gleichbleibenden Abstand zur inneren Oberfläche 23 aufweisen. Alternativ ist es denkbar, den Teilkörper 13 unterschiedlich dick zu gestalten, so dass dadurch ein unterschiedlicher Abstand der Kühlkanäle 3 zur inneren Oberfläche 23 herstellbar ist.

Alternativ und/oder zusätzlich ist es denkbar, die Kühlkanäle 3 zum Modifizieren einer Kühlleistung des Formwerkzeugs 1 beziehungsweise einer lokalen Kühlleistung, mit unterschiedlichen Querschnitten auszulegen.

Der Teilkörper 13 kann eine Deckschale bilden, die die Kühlkanäle 3 aufweist, beispielsweise eingebracht mittels Fräsen. Die Deckschicht 15 wird ebenfalls mittels eines thermischen Beschichtungsverfahrens, beispielsweise Lichtbogenspritzen oder dergleichen aufgebracht. Die Deckschale beziehungsweise der Teilkörper 13 zusammen mit der Deckschicht 15 werden mittels der Verschraubungen 21 auf den Grundkörper 19 geschraubt.

Vorteilhaft ergibt sich ein besonders hohes Maß an Dichtheit zwischen den Kühlkanälen 3, dem Teilkörper 13 und der Deckschicht 15. Vorteilhaft können Fertigungskosten für das Formwerkzeug 1 eingespart werden, wobei insbesondere die Deckschicht 15 im Bereich der Oberfläche 17 nicht gefräst werden muss. Vorteilhaft kann die Deckschicht 15 mit besonderen Materialeigenschaften eingestellt werden, insbesondere solchen, die einem Einbringen der Kühlkanäle 3 entgegenstehen beziehungsweise ein solches erschweren würden. Vorteilhaft können die Kühlkanäle in den dafür auslegbaren Teilkörper 13 eingebracht werden. Vorteilhaft ist eine einfache Reparatur des Formwerkzeugs 1, insbesondere der Kavität 9 des Formwerkzeugs 1, möglich. Dazu kann vorteilhaft auf einfache Art und Weise die Deckschicht 15 mittels des Lichtbogenspritzens erneuert und/oder ergänzt werden.

### Bezugszeichenliste

- 1: Formwerkzeug
- 3: Kühlkanäle
- 5: obere Werkzeughälfte
- 7: untere Werkzeughälfte
- 9: Kavität
- 11: Doppelpfeil
- 13: Teilkörper
- 15: Deckschicht
- 17: ursprüngliche Oberfläche
- 19: Grundkörper
- 21: Verschraubungen
- 23: innere Oberfläche

## Patentansprüche

1. Verfahren zum Herstellen eines kühlbaren Formwerkzeugs (1), umfassend:
- ein Herstellen eines an einer Oberfläche (17) Fluidpfade aufweisenden metallischen Teilkörpers (13) des Formwerkzeugs (1),
**gekennzeichnet durch**
- Schützen der Fluidpfade gegen ein Eindringen von Partikeln, und
- Auftragen einer Deckschicht (15) über die geschützten Fluidpfade mittels eines thermischen Beschichtungsverfahrens.

2. Verfahren nach Anspruch 1, mit:
- Auftragen einer Deckschicht (15) auf die Oberfläche (17) mittels eines thermischen Beschichtungsverfahrens.

3. Verfahren nach einem der vorhergehenden Ansprüche, mit:
- Einbringen der Fluidpfade in die Oberfläche (17) mittels Materialabtragen.

4. Verfahren nach einem der vorhergehenden Ansprüche, mit:
- Schützen der Fluidpfade mittels Abdecken und/oder mittels Einbringen eines Füllmediums.

5. Verfahren nach einem der vorhergehenden Ansprüche, mit zumindest einem des Folgenden:
- Schützen der Fluidpfad mittels Einbringen einer für Partikel zumindest schwer durchlässigen Kanalvorrichtung in die Fluidpfade,
- einer Spiralfeder, einem Schlauch, einem flexiblen Rohr, einem Verbundrohr oder einem Wellrohr.

6. Verfahren nach einem der vorhergehenden Ansprüche mit zumindest einem des Folgenden:
- Nachbehandeln der Deckschicht (15),
- Nachbehandeln der Deckschicht (15) mittels Kugelstrahlen,
- Nachbehandeln der Deckschicht (15) mittels Polieren,
- Nachbehandeln der Deckschicht (15) mittels Nachfräsen.

7. Verfahren nach einem der vorhergehenden Ansprüche, mit:
- Bilden einer Kavität (9) mittels der Deckschicht (15).

8. Verfahren nach einem der vorhergehenden Ansprüche 1 bis 6, mit:
- Bilden einer Kavität (9) mittels einer der Deckschicht (15) gegenüberliegenden Oberfläche (23) des Teilkörpers (13),
- Zusammenfügen des Teilkörpers (13) mit einem Grundkörper (19) des Formwerkzeugs (1).

9. Verfahren nach einem der vorhergehenden Ansprüche, **dadurch gekennzeichnet, dass** als thermisches Beschichtungsverfahren Flammspritzen, Laserspritzen, Detonationsspritzen, Kaltgasspritzen, Lichtbogenspritzen, Metallschutzgasschweißen oder Plasmaschweißen verwendet wird.

10. Kühlbares Formwerkzeug (1), insbesondere herstellbar mittels eines Verfahrens nach einem der vorhergehenden Ansprüche, mit einem an einer Oberfläche (17) Fluidpfade aufweisenden metallischen Teilkörper (13), **dadurch gekennzeichnet, dass** der Teilkörper (13) eine mittels Lichtbogenspritzen aufgebrachte Deckschicht (15) aufweist, wobei zwischen der Deckschicht (15) und dem Teilkörper (13) Kühlkanäle (3) angeordnet sind.

11. Formwerkzeug (1) nach Anspruch 10, **dadurch gekennzeichnet, dass** eine Oberfläche der Deckschicht (15) eine Kavität (9) des Formwerkzeugs (1) bildet.

12. Formwerkzeug (1) nach Anspruch 10, **dadurch gekennzeichnet, dass** die Oberfläche der Deckschicht (15) einem Grundkörper (19) des Formwerkzeugs (1) zugeordnet ist.

## Claims

1. Process for producing a coolable moulding tool (1), comprising:
- producing a metallic partial body (13), having fluid paths on a surface (17), of the moulding tool (1),
**characterized by**
- protecting the fluid paths against penetration of particles, and
- applying a cover layer (15) over the protected fluid paths by means of a thermal coating process.

2. Process according to Claim 1, comprising:
- applying a cover layer (15) to the surface (17) by means of a thermal coating process.

3. Process according to either of the preceding claims, comprising:
- introducing the fluid paths into the surface (17) by means of material removal.

4. Process according to one of the preceding claims, comprising:
- protecting the fluid paths by means of coverage and/or by means of the introduction of a filling medium.

5. Process according to one of the preceding claims, comprising at least one of the following:
- protecting the fluid path by means of the introduction of a channel apparatus which is at least sparingly permeable for particles into the fluid paths,
- a coil spring, a hose, a flexible tube, a composite tube or a corrugated tube.

6. Process according to one of the preceding claims, comprising at least one of the following:
- aftertreating the cover layer (15),
- aftertreating the cover layer (15) by means of shot blasting,
- aftertreating the cover layer (15) by means of polishing,
- aftertreating the cover layer (15) by means of remilling.

7. Process according to one of the preceding claims, comprising:
- forming a cavity (9) by means of the cover layer (15).

8. Process according to one of the preceding Claims 1 to 6, comprising:
- forming a cavity (9) by means of a surface (23) of the partial body (13) lying opposite to the cover layer (15),
- assembling the partial body (13) with a main body (19) of the moulding tool (1).

9. Process according to one of the preceding claims, **characterized in that** the thermal coating process used is flame spraying, laser spraying, detonation spraying, cold gas spraying, electric arc spraying, metal inert gas welding or plasma welding.

10. Coolable moulding tool (1), in particular producible by means of a process according to one of the preceding claims, with a metallic partial body (13) having fluid paths on a surface (17), **characterized in that** the partial body (13) has a cover layer (15) which has been applied by means of electric arc spraying, cooling channels (3) being arranged between the cover layer (15) and the partial body (13).

11. Moulding tool (1) according to Claim 10, **characterized in that**.a surface of the cover layer (15) forms a cavity (9) of the moulding tool (1).

12. Moulding tool (1) according to Claim 10, **characterized in that** the surface of the cover layer (15) is assigned to a main body (19) of the moulding tool (1).

## Revendications

1. Procédé de fabrication d'un outil de moulage (1) apte à être refroidi, le procédé comportant les étapes qui consistent à :
fabriquer un corps partiel métallique (13) de l'outil de moulage (1) qui présente des parcours de fluide sur une surface (17),
**caractérisé par** les étapes qui consistent à
protéger les parcours de fluide contre la pénétration de particules et
au moyen d'un procédé de revêtement thermique, appliquer une couche de recouvrement (15) sur le parcours de fluide protégé.

2. Procédé selon la revendication 1, présentant l'étape qui consiste à appliquer une couche de recouvrement (15) sur la surface (17) au moyen d'un procédé de revêtement thermique.

3. Procédé selon l'une des revendications précédentes, présentant l'étape qui consiste à ménager le parcours de fluide dans la surface (17) par enlèvement de matière.

4. Procédé selon l'une des revendications précédentes, présentant l'étape qui consiste à protéger le parcours de fluide par recouvrement et/ou par apport d'un fluide de remplissage.

5. Procédé selon l'une des revendications précédentes, présentant au moins l'une des étapes suivantes :
protéger les parcours de fluide par apport dans les parcours de fluide d'un dispositif à canal au moins difficilement accessible pour les particules et
un ressort spiralé, un flexible, un tube flexible, un tube de raccordement ou un tube ondulé.

6. Procédé selon l'une des revendications précédentes, présentant au moins l'une des étapes suivantes :
post-traiter la couche de recouvrement (15),
post-traiter la couche de recouvrement (15) par projection de billes,
post-traiter la couche de recouvrement (15) par polissage et
post-traiter la couche de recouvrement (15) par fraisage final.

7. Procédé selon l'une des revendications précédentes, présentant l'étape qui consiste à former une cavité (9) au moyen de la couche de recouvrement (15).

8. Procédé selon l'une des revendications 1 à 6 qui précèdent, présentant les étapes qui consistent à :
former une cavité (9) au moyen d'une surface (23) du corps partiel (13) située face à la couche de recouvrement (15) et
assembler le corps partiel (13) avec un corps de base (19) de l'outil de moulage (1).

9. Procédé selon l'une des revendications précédentes, **caractérisé en ce qu'**il utilise comme procédé de revêtement thermique la projection à la flamme, la projection au laser, la projection par détonation, la projection au gaz froid, la projection par arc lumineux, le soudage de métal sous gaz de protection ou le soudage au plasma.

10. Outil de moulage (1) apte à être refroidi, apte en particulier à être fabriqué au moyen d'un procédé selon l'une des revendications précédentes et présentant sur une surface (17) un corps métallique partiel (13) présentant des parcours de fluide,
**caractérisé en ce que**
le corps partiel (13) présente une couche de recouvrement (15) appliquée par projection à l'arc, des canaux de refroidissement (3) étant disposés entre la couche de recouvrement (15) et le corps partiel (13).

11. Outil de moulage (1) selon la revendication 10, **caractérisé en ce qu'**une surface de la couche de recouvrement (15) forme une cavité (9) de l'outil de moulage (1).

12. Outil de moulage (1) selon la revendication 10, **caractérisé en ce que** la surface de la couche de recouvrement (15) est associée à un corps de base (19) de l'outil de moulage (1).
